# EUROPEAN PATENT APPLICATION

(11) **EP 4 266 416 A1**
(43) Date of publication of application: **25.10.2023**
(21) Application number: 22874594.9
(22) Date of filing: 07.09.2022
(51) Int. Cl.: H01M 4/36

(54) **NEGATIVE ELECTRODE MATERIAL AND PREPARATION METHOD THEREFOR, AND LITHIUM-ION BATTERY**

(30) Priority: 30.09.2021 CN 202111160157
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: AN, Weili, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2022/117555
(87) International publication number: WO 2023/051205

(57) **Abstract**

The present disclosure relates to the technical field of anode materials, and provides an anode material, a method preparing the same, and a lithium-ion battery. The anode material has a core-shell structure. The anode material includes a core and a porous silicon-carbon composite layer distributed on at least part of a surface of the core. The core includes a silicon-based material, and the porous silicon-carbon composite layer includes a carbon matrix and silicon particles dispersed in the carbon matrix; the carbon matrix has pores. The anode material of the present disclosure has high conductivity and high capacity, which can effectively suppress volume expansion and improve the electrochemical performance of the anode material in a battery.

## Description

### RELATED APPLICATIONS

The present disclosure claims priority to Chinese Patent Application No. 202111160157.7, filed on September 30, 2021, with titled as "ANODE MATERIAL, METHOD FOR PREPARING THE SAME, AND LITHIUM ION BATTERY", which is entirely incorporated herein by reference.

### TECHNICAL FIELD

The present disclosure relates to the technical field of anode materials, and in particular, to an anode material, a method for preparing the anode material, and a lithium-ion battery.

### BACKGROUND

Silicon is a second abundant element in the earth's crust. It is a common semiconductor material and has become an indispensable and important technical basis for modern high-tech society. Silicon simple substance has extensive and important roles applied in energy, semiconductor, organic silicon and metallurgical industries. At present, the anode materials of mature commercial lithium-ion batteries are mainly graphite carbon materials, but the theoretical lithium storage capacity of carbon materials is only 372 mAh/g, which cannot meet requirements of high energy density materials. When used as the anode material of lithium-ion batteries, silicon has a very high theoretical capacity (about 4200 mAh/g) ten times the capacity of commercial graphite. It has great prospects in energy storage, but the volume expansion of silicon anode materials is large (>300 %) during a process of the de-intercalation and intercalation of lithium. The high volume change effect leads to its poor cycle stability, resulting in a certain distance from its practical application.

Therefore, how to prepare an anode material with a stable structure, high capacity, low expansion and excellent cycle performance is a technical problem in the field of lithium-ion batteries.

### SUMMARY

In view of this, the present disclosure provides an anode material, a method for preparing the anode material, and a lithium ion battery. The anode material of the present disclosure has high conductivity, high capacity, which can effectively suppress volume expansion and improve the electrochemical performance of the anode material in a battery.

In a first aspect, an embodiment of the present disclosure provides an anode material. The anode material includes a core and a porous silicon-carbon composite layer distributed on at least part of a surface of the core. The core includes a silicon-based material. The porous silicon-carbon composite layer includes a carbon matrix and silicon particles dispersed in the carbon matrix. The carbon matrix has pores.

In some embodiments, at least part of the silicon particles are dispersed in the pores of the carbon matrix.

In some embodiments, the core is a silicon-based material.

In some embodiments, the silicon-based material includes at least one of silicon simple substance, a silicon alloy, and a silicon oxide.

In some embodiments, the silicon-based material includes a silicon alloy, and the silicon alloy is at least one selected from a group consisting of silicon-tin alloy, silicon-lithium alloy, and silicon-germanium alloy.

In some embodiments, the silicon-based material includes a silicon oxide, and the silicon oxide is SiOₓ, where 0<x≤2.

In some embodiments, a shape of the silicon-based material includes at least one of a granular shape, a spherical shape, a spheroidal shape, a linear shape, and a tubular shape.

In some embodiments, the silicon-based material has a median particle size of 0.1µm to 15µm.

In some embodiments, the silicon-based material has a median particle size of 1µm to 5µm.

In some embodiments, the porous silicon-carbon composite layer has a thickness of 0.01µm to 10µm.

In some embodiments, a ratio of the median particle size of the silicon-based material to the thickness of the porous silicon-carbon composite layer is (1 to 10): 1.

In some embodiments, the anode material has a porosity of 10% to 50%.

In some embodiments, the carbon matrix in the porous silicon-carbon composite layer has a mass proportion of 5% to 80%.

In some embodiments, the carbon matrix has pores, and the pores include macropores and mesopores.

In some embodiments, the carbon matrix has pores, the pores include macropores and mesopores, and a pore volume ratio of the macropores to the mesopores is (0.5 to 5): 1.

In some embodiments, the silicon particle has a median particle size of 1nm to 500nm.

In some embodiments, the silicon particle has a median particle size of 10nm to 100nm.

In some embodiments, a mass ratio of the silicon particles to the silicon-based material is (0.3 to 0.7):1.

In some embodiments, the carbon matrix includes a solid part and pores, and at least part of the silicon particles are dispersed in the solid part.

In some embodiments, the carbon matrix includes a solid part and pores, part of silicon particles are dispersed in the pores, and part of silicon particles are dispersed in the solid part.

In some embodiments, the carbon matrix includes a solid part and pores, part of silicon particles are dispersed in the pores, and part of silicon particles are dispersed in the solid part; and a molar ratio of the silicon particles to the silicon particles dispersed in the pores is 1:(0.5 to 3).

In some embodiments, when a compression rate of the porous silicon-carbon composite layer reaches 50%, a rebound rate of the porous silicon-carbon composite layer is 90% or more.

In some embodiments, the anode material further includes a coating layer formed on at least part of a surface of the porous silicon-carbon composite layer.

In some embodiments, the coating layer includes at least one of a carbon material, a metal oxide, a nitride and a conductive polymer.

In some embodiments, the coating layer includes a carbon material, and the carbon material includes at least one of graphene, soft carbon, hard carbon, and amorphous carbon.

In some embodiments, the coating layer includes a metal oxide, and the metal oxide includes at least one of titanium oxide, aluminum oxide, lithium oxide, cobalt oxide, and vanadium oxide.

In some embodiments, the coating layer includes a nitride, and the nitride includes at least one of titanium nitride, vanadium nitride, cobalt nitride, nickel nitride, and carbon nitride.

In some embodiments, the coating layer includes a conductive polymer, and the conductive polymer includes at least one of polyaniline, polyacetylene, polypyrrole, polythiophene, poly(3-hexylthiophene), polyp-styrene, polypyridine and polyphenylene vinylidene.

In some embodiments, the coating layer has a thickness of 3nm to 200nm.

In some embodiments, the anode material has a median particle size of 0.1µm to 20µm.

In some embodiments, the anode material has a specific surface area of 1.0m²/g to 50m²/g.

In some embodiments, the anode material has a powder tap density of 1.0g/cm³-1.8g/cm³.

In some embodiments, the anode material has an oxygen content of smaller than 20%.

In some embodiments, the coating layer has a porosity of 2% to 10%.

In a second aspect, the present disclosure provides a method for preparing an anode material. The method includes following steps of:
preparing a composite, wherein the composite includes a silicon-based material and an AₓSi alloy formed on at least part of a surface of the silicon-based material, A is an active metal, and X=1-3;
thermal reacting after the composite is mixed with a carbon source, such that at least part of the AₓSi alloy is converted into an oxide of metal A; and removing the oxide of metal A to obtain a silicon-carbon composite material.

In some embodiments, the silicon-based material includes at least one of silicon simple substance, a silicon alloy, and a silicon oxide.

In some embodiments, the silicon-based material includes a silicon alloy, and the silicon alloy is at least one selected from a group consisting of silicon-tin alloy, silicon-lithium alloy, and silicon-germanium alloy.

In some embodiments, the silicon-based material includes a silicon oxide, and the silicon oxide is SiOₓ, where 0<x≤2;

In some embodiments, a shape of the silicon-based material includes at least one of a granular shape, a spherical shape, a spheroidal shape, a linear shape, and a tubular shape.

In some embodiments, a shape of the silicon-based material is a spherical shape or a spheroidal shape.

In some embodiments, the silicon-based material has a median particle size of 0.1µm to 15µm.

In some embodiments, the silicon-based material has a median particle size of 1µm to 5µm.

In some embodiments, the active metal A includes at least one of Mg, Al, Ca and Zn.

In some embodiments, a molar ratio of the silicon-based material to the active metal A is 1 :(0.1 to 3).

In some embodiments, a step for preparing the composite includes: alloying the silicon-based material with the active metal A under a protective atmosphere.

In some embodiments, a step for preparing the composite includes: alloying the silicon-based material with the active metal A under a protective atmosphere, wherein a temperature of an alloying reaction is 400°C to 900°C, and a heat preservation period is 1hour (h) to 24hous.

In some embodiments, a step for preparing the composite includes: alloying the silicon-based material with the active metal A under a protective atmosphere, wherein a heating rate of the alloying reaction is 1°C/min to 10°C/min.

In some embodiments, a step for preparing the composite includes: alloying the silicon-based material with the active metal A under a protective atmosphere, wherein the protective atmosphere includes at least one selected from a group consisting of nitrogen, helium, neon, argon, krypton and xenon.

In some embodiments, the AₓSi alloy formed on at least part of the surface of the silicon-based material has a thickness of 0.05µm to 20µm.

In some embodiments, the composite has a median particle size of 0.1µm to 20µm.

In some embodiments, the carbon source includes an organic carbon source.

In some embodiments, the carbon source includes an organic carbon source, and the organic carbon source includes aldehydes, phenols and corresponding halogenated composites thereof that are solid at room temperature and have a boiling point <650°C.

In some embodiments, the carbon source includes an inorganic carbon source.

In some embodiments, the carbon source includes an inorganic carbon source, and the inorganic carbon source includes a carbon-containing inorganic salt.

In some embodiments, a step of thermal reacting the composite with the carbon source is carried out under a protective atmosphere, and the protective atmosphere includes at least one selected from a group consisting of nitrogen, helium, neon, argon, krypton, and xenon.

In some embodiments, a step of removing the active metal A in a thermal reaction product includes pickling the thermal reaction product with an acid solution.

In some embodiments, a step of removing the active metal A in the thermal reaction product includes pickling the thermal reaction product with an acid solution, and the acid solution includes at least one of hydrochloric acid, nitric acid and sulfuric acid.

In some embodiments, a molar ratio of the composite to the carbon source is 1: (0.01 to 10).

In some embodiments, the thermal reaction has a temperature of 200°C to 950°C.

In some embodiments, the thermal reaction has a heat preservation period of 1h to 24h.

In some embodiments, the thermal reaction has a heating rate of 1°C/min to 20°C/min.

In some embodiments, the method further includes forming a coating layer on a surface of the silicon-carbon composite material to obtain the anode material.

In some embodiments, a step of forming the coating layer on the surface of the silicon-carbon composite material includes: sintering a mixture containing the silicon-carbon composite material and polymer particles under a vacuum condition to form the coating layer.

In some embodiments, the polymer particles include at least one selected from a group consisting of asphalt, resin, polyester-based polymers, and polyamide-based polymers.

In some embodiments, a mass ratio of polymer particles to the silicon-carbon composite material is 1:(0.1 to 10).

In some embodiments, the sintering temperature is 600°C to 1000°C.

In some embodiments, the sintering heat preservation period is 1h-24h.

In some embodiments, the sintering heating rate is 1°C/min to 20°C/min.

In some embodiments, a vacuum degree under a vacuum condition is smaller than 0.1Mpa.

In some embodiments, a step of forming the coating layer on the surface of the silicon-carbon composite material includes: synthesizing a polymer on the surface of the silicon-carbon composite material using a chemical synthesis method, to form a coating layer.

In some embodiments, the polymer includes at least one of a resin polymer and a polyester-based polymer.

In some embodiments, a step of forming the coating layer on the surface of the silicon-carbon composite material includes: using chemical vapor deposition of an organic carbon source to form a coating layer on the surface of the silicon-carbon composite material layer.

In a third aspect, the present disclosure provides a lithium ion battery, the lithium ion battery includes the anode material according to the first aspect or the anode material prepared by the method according to the second aspect.

The technical solution of the present disclosure has at least the following beneficial effects.
(1) With respect to the anode material of the present disclosure, the surface of the silicon-based material core is provided with a porous silicon-carbon composite layer as a buffer layer. The porous silicon-carbon composite layer includes a carbon matrix and silicon particles dispersed in the carbon matrix. The carbon matrix has pores, which can effectively reduce the volume expansion of the silicon-based material and serve as an elastic conductor. The porous silicon-carbon composite layer can provide ion and electron transmission paths, enhance the conductivity between the silicon-based material and the outside world, and improve the rate performance. In addition, the silicon particles are embedded in the carbon matrix, that is, the carbon matrix is used to coat the silicon particles, which can improve the conductivity of the silicon particles, thereby improving the rate performance of the anode material, and meeting the requirements of the battery to achieve fast charging characteristics.
(2) With respect to the method for preparing the anode material provided by the present disclosure, a layer of silicon alloy AₓSi is formed on the surface of the silicon-based material by alloying the silicon-based material with the active metal A, that is, to obtain a composite in which the AₓSi coats silicon-based material. The composite reacts thermally with the carbon source, such that at least part of the AₓSi alloy is converted into the oxide of metal A. The oxide of metal A can be removed to form a carbon matrix with pores on the surface of the silicon-based material, and the silicon particles obtained by reduction are dispersed in the carbon matrix. The pores of the loose carbon matrix can effectively reduce the volume expansion of the silicon-based material, and serve as an elastic conductor, which can provide more ion and electron transmission paths, enhance the conductivity between the silicon core and the outside world, and improve the rate performance. The method of the present disclosure is simple and easy, and can effectively solve the problems of large volume expansion and poor conductivity of the silicon anode, thereby improving the electrochemical performance of the anode material as a battery.

### BRIEF DESCRIPTION OF DRAWINGS

The present disclosure will be further described below in conjunction with the accompanying drawings and embodiments.
FIG. 1 is a structural schematic diagram of an anode material of the present disclosure;
FIG. 2 is a structural schematic diagram illustrating that silicon particles embed in pores 22 of the present disclosure;
FIG. 3 is a structural schematic diagram illustrating a process for preparing the anode material provided by an embodiment of the present disclosure;
FIG. 4 is a flowchart for preparing an anode material of the present disclosure;
FIG. 5 is a scanning electron microscope (SEM) photograph of the anode material prepared in Example 1 of the present disclosure;
FIG. 6 is a Raman diagram of the anode material prepared in Example 1 of the present disclosure;
FIG. 7 is an XRD pattern of the anode material prepared in Example 1 of the present disclosure;
FIG. 8 is a cycle performance curve of the anode material prepared in Example 1 of the present disclosure.

In the drawings:
1 - silicon-based material;
2 - porous silicon-carbon composite layer;
21 - carbon matrix;
22 - pore;
23 - silicon particle;
3 - coating layer.

### DESCRIPTION OF EMBODIMENTS

In order to better understand technical solutions of the present disclosure, the embodiments of the present disclosure are described in details with reference to the drawings.

It should be clear that the described embodiments are merely part of the embodiments of the present disclosure rather than all of the embodiments. All other embodiments obtained by those skilled in the art without paying creative labor shall fall into the protection scope of the present disclosure.

The terms used in the embodiments of the present disclosure are merely for the purpose of describing specific embodiment, rather than limiting the present disclosure. The terms "a", "an" and "the" in a singular form in the embodiments of the present disclosure and the attached claims are also intended to include plural forms thereof, unless noted otherwise.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

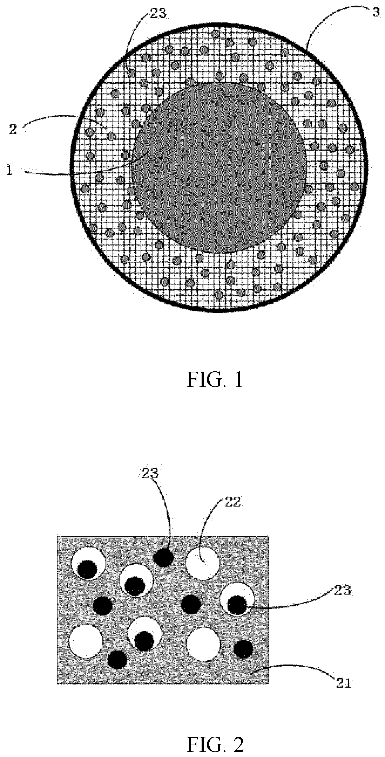

The embodiments of the present disclosure provides an anode material. The structural diagram of the anode material is shown in FIG. 1. The anode material has a core-shell structure. The anode material includes a core 1 and a porous silicon-carbon composite layer 2 distributed on at least part of the surface of the core 1. The core 1 includes a silicon-based material. The porous silicon-carbon composite layer 2 includes a carbon matrix 21 and silicon particles 23 dispersed in the carbon matrix 21, and the carbon matrix 21 has pores 22.

In the above technical solution, the porous silicon-carbon composite layer 2 used as a buffer layer is provided on the surface of the silicon-based material core 1. The porous silicon-carbon composite layer 2 includes the carbon matrix 21 and silicon particles 23 dispersed in the carbon matrix 21. The carbon matrix 21 has pores 22. The pores 22 can effectively reduce the volume expansion of the silicon-based material, and serve as an elastic conductor. The porous silicon-carbon composite layer 2 can provide ion and electron transmission paths, and enhance the conductivity between the core 1 and the outside world, thereby improving the rate performance. In addition, the silicon particles 23 are embedded in the carbon matrix 21, that is, the carbon matrix 21 is used to coat the silicon particles 23, which can improve the conductivity of the silicon particles, thereby improving the rate performance of the anode material, and meeting the requirements for fast charging characteristics of the battery. Moreover, the silicon particles 23 are dispersed in the carbon matrix 21, which can also avoid the problem of damage to the structure of the entire anode material caused by stress concentration due to agglomeration of the silicon particles.

In some embodiments, at least part of the silicon particles 23 are dispersed in the pores 22 of the carbon matrix 21. As shown in FIG. 2, it is a structural schematic diagram shows that the silicon particles are dispersed in the pores 22 of the present disclosure. It can be understood that when the silicon particles 23 are dispersed in the pores 22, the silicon particles 23 are not completely filled, and there is a certain space in the pores 22 for reducing the volume expansion of the silicon particles 23, such that the damage of the entire anode material can be prevented due to volume expansion, while the expansion of the electrode film is reduced to improve the safety of the battery.

In some embodiments, the carbon matrix 21 includes a solid part and pores 22 distributed in the solid part, at least part of the silicon particles 23 are embedded in the solid part, and part of the silicon particles 23 are embedded in the solid part. The silicon particle 23 is embedded in the solid part, that is, the solid part of the carbon matrix 21 is tightly coated on the surface of the silicon particle 23.

In some embodiments, some silicon particles 23 are dispersed in the pores, and some silicon particles 23 are embedded in the solid part.

It can be understood that the silicon particles 23 can be dispersed only in the solid part of the carbon matrix 21, or only in the pores 22 of the carbon matrix 21, or silicon particles 23 are presented in both the solid part and the pores 22. Among them, when the silicon particles 23 are presented in the solid part and the pores 22, the load of silicon in the anode material can be greatly increased, and the problem of uneven dispersion of silicon particles in the carbon material can be effectively solved, so that the effective utilization rate of silicon particles are improved, thereby improving the tap density and specific capacity of the entire anode material, and improving the energy density of the entire battery material.

In the present disclosure, by controlling the content of silicon particles at different positions of the porous silicon-carbon composite layer 2, the requirements for high rate and low expansion of the anode material products can be met.

In some embodiments, the core includes a silicon-based material.

In some embodiments, the silicon-based material includes at least one of silicon simple substance, silicon alloy and silicon oxide.

In some embodiments, the silicon alloy includes at least one of silicon-tin alloy, silicon-lithium alloy, and silicon-germanium alloy.

In some embodiments, the silicon oxide is SiOₓ, where 0<x≤2.

In some embodiments, the shape of the silicon-based material includes at least one of a granular shape, a spherical shape, a spheroidal shape, a linear shape, and a tubular shape.

In some embodiments, the shape of the silicon-based material is a spherical shape or a spheroidal shape.

In some embodiments, the median particle size of the silicon-based material is 0.1µm to 15µm, e.g., 0.1µm, 0.2µm, 0.3µm, 0.5µm, 1µm, 2µm, 3µm, 4µm, 5µm, 7µm, 8µm, 9µm, 10µm, 11µm, 12µm, 13µm, 14µm or 15µm, etc. Of course, other values within the above range can also be used, which is not limited here. Preferably, the median particle size of the silicon-based material is 0.5µm to 5µm.

In some embodiments, the thickness of the porous silicon-carbon composite layer 2 is 0.01µm to 10µm. Specifically, the thickness of the porous silicon-carbon composite layer 2 can be 0.01µm, 0.5µm, 1µm, 2µm, 3µm, 4µm, 5µm, 6µm, 7µm, 8µm, 9µm, 10µm, etc. Of course, it can also be other values within the above range, which is not limited here. When the porous silicon-carbon composite layer 2 is smaller than 0.01µm, it is difficult to load silicon particles 23. When the porous silicon-carbon composite layer 2 is greater than 10µm, the thickness of the porous silicon-carbon composite layer 2 increases, the lithium ion transmission efficiency decreases, and the overall performance of the anode material is reduced. Preferably, the thickness of the porous silicon-carbon composite layer 2 is 0.5µm to 5µm. It can be understood that the thickness of the porous silicon-carbon composite layer 2 of the present disclosure is consistent with the thickness of the carbon matrix 21, i.e., the thickness of the carbon matrix 21 is also 0.01µm to 10µm.

In some embodiments, a ratio of the median particle size of the silicon-based material to the thickness of the porous silicon-carbon composite layer is (1 to 10):1. The thickness ratio can be specifically 1:1, 2:1, 3:1, 4:1, 5:1, 6:1, 7:1, 8:1, 9:1 or 10:1, etc. Of course, it can also be other values within the above range, which is not limited here. Preferably, the ratio of the median particle size of the silicon-based material 1 to the thickness of the porous silicon-carbon composite layer 2 is (1 to 3):1. In the present disclosure, by controlling the ratio of the thickness of the porous silicon-carbon composite layer 2 to the median particle size of the silicon-based material 1, the present disclosure can provide good electrical conductivity to the silicon-based material 1 with a larger size range and can effectively absorb the volume expansion of the silicon-based material 1 without losing electrical contact.

In some embodiments, the porosity of the anode material is 10% to 50%. Specifically, the porosity of the anode material can be 10%, 20%, 30%, 40%, or 50%, etc. Of course, it can also be other values within the above range, which is not limited here. Controlling the porosity of the anode material within the above range can satisfy the volume expansion space of the silicon particles 23 and the silicon-based material. Preferably, the porosity of the anode material ranges from 20% to 40%. It can be understood that the porosity refers to a ratio of the volume of pores in the anode material to the total volume of the anode material.

In some embodiments, the mass proportion of the carbon matrix in the porous silicon-carbon composite layer is 5% to 80%, e.g., 5%, 10%, 20%, 30%, 40%, 50%, 60%, 70% or 80%, etc. Of course, it can also be other values within the above range, which is not limited here. It can be understood that the anode material of the present disclosure chooses the carbon matrix 21 as the carrier of the silicon particles 23, which can increase the capacity of the anode material without destroying its structure. Controlling the content of the carbon matrix 21 in the porous silicon-carbon composite layer 2 within the above range can accommodate the silicon particles 23 well, and at the same time, the porous silicon-carbon composite layer 2 can also tightly and firmly coat the silicon-based material 1 to avoid the loss of electrical contact between the silicon-based material and the porous silicon-carbon composite layer 2 due to volume changes after the silicon is intercalated in lithium.

In some embodiments, the molar ratio of the silicon particles embedded in the solid part to the silicon particles dispersed in the pores is 1:(0.5 to 3), e.g., 1:0.5, 1:0.8, 1:1, 1:1.5, 1:1.8, 1:2, 1:2.5, 1:2.8 or 1:3, etc., which is not limited here. By controlling the silicon content of the two kinds of locations, the requirements for high rate and low expansion silicon carbon products can be met, and the balance between high rate and low expansion can be achieved. In particular, within the above-mentioned limited range, when the molar ratio of the silicon particles in the solid part is relatively large, the silicon particles embedded in the solid part are completely coated by the carbon matrix, which can improve the conductivity of the silicon particles and improve the rate performance of the composite material and meet the fast charging characteristics of the battery. When the molar ratio of silicon particles dispersed in the pores is relatively large, there is a certain space in the pores to reduce the volume expansion of the silicon particles, which can avoid the damage of the entire anode material due to volume expansion, and reduce the expansion of the electrode film at the same time, such that the battery safety can be improved.

In some embodiments, when the compression rate of the porous silicon-carbon composite layer reaches 50%, the rebound rate of the porous silicon-carbon composite layer is more than 90%. The rebound rate of the porous silicon-carbon composite layer can be 91%, 93%, 95% or 98%, etc. The rebound rate of the porous silicon-carbon composite layer is controlled to more than 90%, so as to avoid the pulverization of the material and the loss of electrical contact with the silicon-based material due to the volume expansion of the anode material.

In some embodiments, the carbon matrix 21 has pores 22. The pores 22 include macropores and mesopores.

Understandably, each macropore is a pore with a pore diameter greater than 50nm, each mesopore is a pore with a pore diameter between 2nm and 50nm, and the pore volume ratio of macropores to mesopores is (0.5 to 5):1. Specifically, the pore volume ratio of macropores to mesopores is 0.5:1, 1:1, 2:1, 3:1, 4:1 or 5:1, etc. Of course, it can also be other values within the above range, which is not limited here. The pores 22 in the present disclosure are abundant macropores and mesopores, the volume expansion of the silicon-based material 1 can be reduced by compressing the pores 22, and the silicon particles in the pores 22 also have enough space to reduce the volume expansion. In addition, due to the presence of pores 22, the expansion-contraction characteristics of silicon particles 23 after de-intercalation and intercalation of lithium can be well synchronized with the expansion or contraction behavior of silicon-based material 1, and always maintain good electrical contact with silicon-based material 1, ensuring excellent electron transmission properties.

In some embodiments, the median particle size of the silicon particles are 1nm to 500nm, and the median particle size of the silicon particles may be 1nm, 5nm, 10nm, 20nm, 30nm, 40nm, 50nm, 60nm, 70nm, 80nm, 90nm, 100nm, 110nm, 120nm, 130nm, 140nm, 150nm, 160nm, 170nm, 180nm, 190nm, 200nm, 400nm or 500nm, etc. Of course, it can also be other values within the above range, which is not limited here. It can be understood that controlling the median particle size of the silicon particles within the range mentioned above is to avoid pulverization of the material due to volume expansion during the intercalation of lithium process of the silicon particles, thereby causing structural damage. Preferably, the median particle size of the silicon particles are 5nm to 200nm. More preferably, the median particle size of the silicon particles are 10nm to 100nm.

In some embodiments, the mass ratio of silicon particles to the silicon-based material is (0.3 to 0.7):1, e.g., 0.3:1, 0.4:1, 0.5:1, 0.6:1, or 0.7:1, etc. Of course, other values within the above range may also be used, which is not limited here. Controlling the mass ratio of silicon particles to silicon-based materials within the above range can ensure that the distribution of silicon in the anode material has a certain concentration gradient, that is, the distribution of silicon in the anode material gradually decreases from the inside to the outside, such that it can ensure that the lithium ion diffusion has a uniform concentration gradient, and avoids the electrochemical polarization caused by the uneven concentration of lithium ion diffusion, which will eventually lead to the deterioration of electrochemical performance.

In some embodiments, the anode material further includes a coating layer 3 formed on at least part of the surface of the porous silicon-carbon composite layer 2. It can be understood that on the one hand, providing the coating layer 3 can prevent the electrolyte from entering the anode material and cause side reactions to reduce the first efficiency and capacity, and on the other hand, the coating layer 3 can cooperate with the composite layer 2 to reduce the volume expansion of the silicon-based material, thereby reducing the volume expansion of the entire anode material, and reducing the swelling of the electrode plate.

In some embodiments, the coating layer 3 includes at least one of carbon materials, metal oxides, nitrides and conductive polymers.

In some embodiments, the carbon material includes at least one of graphene, soft carbon, hard carbon, and amorphous carbon. When the coating layer is made of carbon material, the porous silicon-carbon composite layer located on the inner side includes carbon matrix and silicon particles, and the coating layer located on the outer side is made of carbon material. The double-layer carbon layer can enhance the conductivity of the anode material, making the anode material exhibit the advantages of high capacity, long cycle life, high rate performance and low expansion, which can be widely used in the field of the anode of high performance lithium-ion battery.

In some embodiments, the metal oxide includes at least one of titanium oxide, aluminum oxide, lithium oxide, cobalt oxide, and vanadium oxide.

In some embodiments, the nitride includes at least one of titanium nitride, vanadium nitride, cobalt nitride, nickel nitride, and carbon nitride.

In some embodiments, the coating layer includes a conductive polymer including at least one of polyaniline, polyacetylene, polypyrrole, polythiophene, poly(3-hexylthiophene), polyp-styrene, polypyridine, and polyphenylene vinylidene.

In some embodiments, the thickness of the coating layer is 3nm to 200nm, e.g., 3nm, 5nm, 10nm, 50nm, 100nm, 150nm, 200nm, etc. Of course, it can also be other values within the above range, which is not limited here. Preferably, the thickness of the coating layer is 5nm to 50nm. It can be understood that the coating layer can reduce the contact between silicon and the electrolyte, reduce the formation of passivation film, increase the conductivity of the anode material, suppress the volume expansion of the anode material, and can enhance the reversible capacity and cycle performance of the battery.

In some embodiments, the porosity of the coating layer is 2% to 10%, specifically 2%, 3%, 4%, 5%, 6%, 7%, 8%, 9% or 10%, etc., Of course, other values within the above range may also be used, which is not limited here. It can be understood that the porosity of the coating layer is smaller than that of the porous silicon-carbon composite layer (10% to 50%). Compared with the porous silicon-carbon composite layer, the coating layer is a dense layer, and a certain thickness of the coating layer can effectively isolate the intrusion of electrolyte. Preferably, the porosity of the coating layer is 5% to 10%. In addition, the pore volume of the coating layer accounts for smaller than 50% of the pore volume of the entire anode material, which is beneficial to isolating the coating layer from the electrolyte and reduce the swelling of the electrode plate.

In some embodiments, the median particle size of the anode material is 0.1µm to 20µm, and the median particle size of the anode material can be specifically 0.1 µm, 1 µm, 2µm, 3µm, 4µm, 5µm, 6µm, 7µm, 8µm, 9µm, 10µm, 11µm, 12µm, 13µm, 14µm, 15µm, 16µm, 17µm, 18µm, 19µm, or 20µm, etc. Of course, other values within the above range can also be used, which is not limited here. Preferably, the median particle size of the anode material is 0.1 µm to 10µm. More preferably, the median particle size of the anode material is 1 µm to 5µm. It can be understood that controlling the average particle size of the anode material within the above range is beneficial to improving cycle performance of the anode materials.

In some embodiments, the specific surface area of the anode material is 1.0 m²/g to 50 m²/g, and the specific surface area of the anode material can be 1.0m²/g, 1.5 m²/g, 10m²/g, 20m²/g, 30m²/g. g, 40m²/g, or 50m²/g, etc. Of course, it can also be other values within the above range, which is not limited here. It can be understood that controlling the specific surface area of the anode material within the above range can suppress the volume expansion of the anode material, and be beneficial to improving the cycle performance of the anode material.

In some embodiments, the powder tap density of the anode material is 1.0g/cm³-1.8g/cm³. Specifically, the powder body tap density of the anode material can be 1.0g/cm³, 1.2g/cm³, 1.3g/cm³, 1.4g/cm³, 1.5g/cm³, 1.6g/cm³, 1.7g/cm³, 1.1g/cm³ and 1.8g/cm³, etc. Of course, it can also be other values. Preferably, the powder tap density of the anode material is 1.3 g/cm³ to 1.6g/cm³.

In some embodiments, the oxygen content in the anode material is smaller than 20%. Understandably, if the oxygen content in the anode material is too high, the first efficiency of the anode material will be reduced.

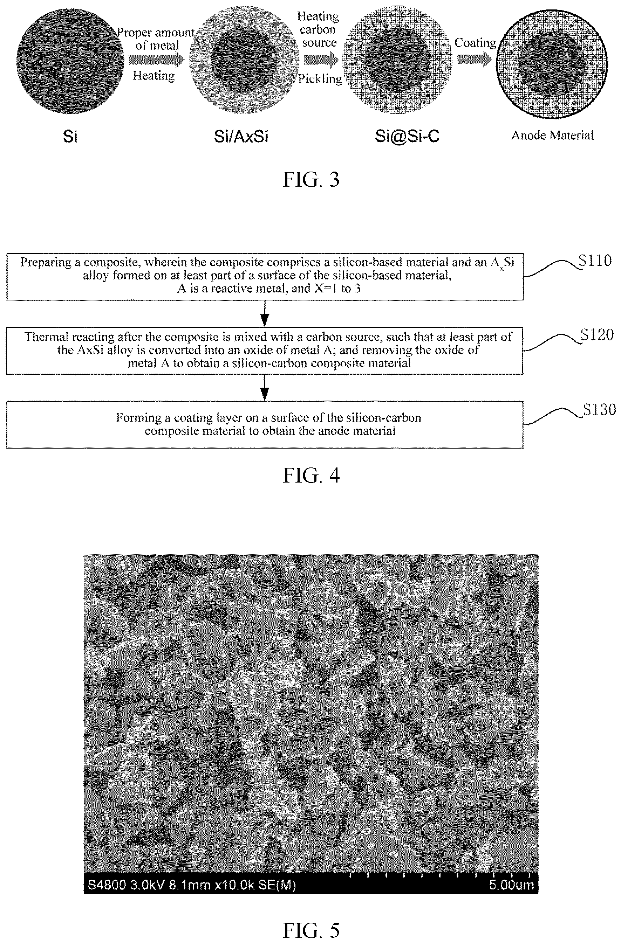

In the second aspect, the embodiments of the present disclosure provides a method for preparing the anode material. As shown in FIG. 3 and FIG. 4, which are sequentially the structural flow chart and the preparation flow chart for preparing the anode material of the present disclosure. The method includes the following steps:
Step S110, preparing a composite, where the composite includes a silicon-based material and an AₓSi alloy formed on at least part of a surface of the silicon-based material, A is an active metal, and X=1-3;
Step S120, thermal reacting after the composite is mixed with a carbon source, such that at least part of the AₓSi alloy is converted into an oxide of metal A; and removing the oxide of metal A to obtain a silicon-carbon composite material.

In the above-mentioned technical solution, the method for preparing the anode material provided by the present disclosure is to form a layer of silicon alloy AₓSi on the surface of the silicon-based material by alloying the silicon-based material with the active metal A, that is, to obtain a composite in which the AₓSi coats silicon-based material. Using the strong reducing properties of the metal components in the silicon alloy AₓSi in the composite at high temperatures, the composite reacts thermally with the carbon source, which can cause the functional groups or chemical bonds in the carbon source to break and recombine to form carbon materials, while the silicon alloy AₓSi and the silicon simple substance will be embedded in the carbon material in situ in the form of silicon particles. After removing the oxide of metal A, a loose and porous carbon matrix material can be formed on the surface of the silicon-based material. The silicon particles are dispersed in the carbon matrix. The pores of the loose carbon matrix can effectively alleviate the volume expansion of silicon-based materials and serve as elastic conductors, which can provide more ion and electron transmission paths, enhance the conductivity between the silicon core and the outside world, and improve the rate performance. The method for preparing the present disclosure is simple and easy, and can effectively solve the problems of large volume expansion and poor conductivity of the silicon anode, thereby improving the electrochemical performance of the anode material as a battery.

The method of the present disclosure is described in detail below in conjunction with examples.

Step S110, a composite is prepared, the composite includes a silicon-based material and an AₓSi alloy formed on at least a part of the surface of the silicon-based material, A is an active metal, and X=1 to 3.

In some embodiments, step S110 includes: alloying the silicon-based material with the active metal A under a protective atmosphere. It can be understood that after the alloying reaction, a part at the surface of the silicon-based material reacts with the active metal A to form a layer of silicon alloy AₓSi, and the inner silicon-based material does not react, thereby obtaining a composite in which AₓSi coats silicon-based material.

In some embodiments, a molar ratio of the silicon-based material to the active metal A is 1:(0.1 to 3), e.g., 1:0.1, 1:0.5, 1:1, 1:1.5, 1:2, 1:2.5, or 1:3, etc. Of course, other values within the above range can also be used, which is not limited here. In the present disclosure, the thickness of the silicon alloy AₓSi is controlled by controlling the molar ratio of the silicon-based material to the active metal.

In some embodiments, the silicon-based material includes at least one of silicon simple substance, a silicon alloy, and a silicon oxide.

In some embodiments, the silicon alloy is selected from at least one of silicon-tin alloy, silicon-lithium alloy, and silicon-germanium alloy.

In some embodiments, the silicon oxide is SiOₓ, where 0<x≤2. Specifically, it can be SiO_{0.1}, SiO_{0.2}, SiO_{0.5}, SiO_{0.8}, SiO_{1.2}, SiO_{1.5}, SiO_{1.8}, SiO_{1.9} or SiO_{2.0}, etc. The reaction of silicon oxide and active metal A can produce a silicon alloy AₓSi and an active metal oxide.

In some embodiments, the shape of the silicon-based material includes at least one of a granular shape, a spherical shape, a spheroidal shape, a linear shape, and a tubular shape. The silicon material of the present disclosure can adopt silicon materials of various shapes, the process is simple, and the universality is wide.

In some embodiments, the shape of the silicon-based material is a spherical shape or a spheroidal shape.

In some embodiments, the median particle size of the silicon-based material is 0.1µm to 15µm, e.g., 0.1µm, 0.2µm, 0.3µm, 0.5µm, 1µm, 2µm, 3µm, 4µm, 5µm, 7µm, 8µm, 9µm, 10µm, 11µm, 12µm, 13µm, 14µm or 15µm, etc. Of course, other values within the above range can also be used, which is not limited here. Preferably, the median particle size of the silicon-based material is 0.5µm to 5µm.

In some embodiments, the active metal A includes at least one of Mg, Al, Ca, and Zn.

In some embodiments, before alloying the silicon-based material with the active metal A, the silicon-based material and the active metal A can be mixed, and the mixing method can include any of magnetic stirring, mechanical stirring, ultrasonic dispersion and grinding dispersion.

In some embodiments, the way of alloying reaction may be, for example, any one of vacuum sintering, hot pressing sintering and normal pressure sintering.

In some embodiments, the temperature of the alloying reaction is 400°C to 900°C, and the temperature of the first heat treatment can specifically be 400°C, 500°C, 600°C, 700°C, 800°C, or 900°C, etc. Of course, it can also be other values within the above range, which is not limited here.

In some embodiments, the heat preservation period of the alloying reaction is 1h to 24 h, e.g., 1h, 3h, 6h, 10h, 13h, 15h, 18h, 20h, or 24h, etc. Of course, it can also be are other values within the above range, which is not limited here.

In some embodiments, the heating rate of the alloying reaction is 1°C/min to 10°C/min, e.g., 1°C/min, 2°C/min, 3°C/min, 4°C/min, 5°C/min, 6°C/min, 7°C/min, 8°C/min, 9°C/min, 10°C/min, etc. Of course, other values within the above range can also be used, which is not limited here.

In some embodiments, the thickness of the AₓSi alloy formed on at least part of the surface of the silicon-based material is 0.05µm to 20µm, e.g., 0.05µm, 0.1µm, 0.5µm, 1µm, 2µm, 3µm, 5µm, 8µm, 10µm, 12µm, 15µm, 17µm, or 20µm, etc. Of course, it can also be other values within the above range, which is not limited here. Understandably, the thickness of the silicon alloy AₓSi is mainly determined by a molar ratio of the silicon-based material to the active metal A.

In some embodiments, the median particle size of the composite is 0.1µm to 20µm, e.g., 0.1µm, 0.5µm, 1µm, 5µm, 10µm, 15µm, or 20µm, etc., and of course it can also be other values within the above range, which is not limited here. Preferably it is 0.5µm to 10µm, more preferably 1µm to 5µm.

In some embodiments, the protective atmosphere includes at least one of nitrogen, helium, neon, argon, krypton, and xenon.

Step S120, the composite is thermal reacted with the carbon source after the composite is mixed with the carbon source, such that at least part of the AₓSi alloy is converted into an oxide of metal A; and the oxide of metal A is removed to obtain a silicon-carbon composite material.

In some embodiments, the carbon source includes an organic carbon source, wherein the organic carbon source is aldehydes, phenols and corresponding halogenated compounds thereof in solid state at room temperature with boiling point <650°C. For example, the organic carbon source can be at least one of polyhydroxy aldehyde, hydroxybenzaldehyde, 2-bromo-5-hydroxybenzaldehyde, 2,6-dichlorophenol, and p-chlorophenol.

In some embodiments, the carbon source includes an inorganic carbon source, and the inorganic carbon source is a carbon-containing inorganic salt, including carbonate and bicarbonate. For example, the inorganic carbon source can be at least one of at least one of calcium carbonate, sodium carbonate, zinc carbonate, barium carbonate, sodium bicarbonate, and calcium bicarbonate.

In some embodiments, step S 120 is performed under a protective atmosphere, and the protective atmosphere includes at least one of nitrogen, helium, neon, argon, krypton, and xenon.

In some embodiments, the carbon matrix includes a solid part and pores distributed in the solid part. Part of silicon particles are dispersed in the pores, and some silicon particles are embedded in the solid part.

It can be understood that part of the silicon particles obtained by reduction is embedded in the solid part of the carbon matrix and completely coated by carbon, which can improve the conductivity of the silicon particles, improve the rate performance of the anode material, and meet the requirements of the fast charging characteristics of the battery. The other part of the silicon particles are embedded in the pores of the carbon matrix, and the silicon particles are not completely filled, leaving enough space to reduce the volume expansion of the silicon particles, such that it can avoid the damage of the entire material due to volume expansion, reduce the expansion of the electrode film, and improve the safety of the battery performance.

The ratio of the AₓSi alloy and the carbon source can be controlled, such as to control the molar ratio of the silicon particles embedded in the solid part and the silicon particles dispersed in the pores. The pores filled with silicon particles are mainly left by the oxide of metal A after pickling. When the carbon source is sufficient, the complete reaction between metal A and carbon source can be guaranteed. At this time, all silicon particles are dispersed in the pores. When the carbon source is insufficient, part of the AₓSi alloy reacts with the carbon source to form nano-silicon particles dispersed in the pores; and the rest of the AₓSi alloy will decompose into A (in a vapor form) and silicon particles in the carbon layer, and the silicon particles are embedded in the solid part. Therefore, the content of silicon particles in two different positions in the carbon matrix can be adjusted by controlling the amount of carbon source, which can meet the requirements of silicon-carbon composite products with a high rate and a low expansion.

In some embodiments, the carbon matrix is an amorphous porous carbon material.

In some embodiments, the step of removing the metal A oxide in the thermal reaction product includes pickling the thermal reaction product with an acid solution. Specifically, the thermal reaction products include carbons, silicon simple substances and oxides of active metal A, and the oxides of active metal A can be removed by acid solution treatment.

In some embodiments, it is sufficient to treat the thermal reaction product in an acid solution with a concentration of 1mol/L to 5mol/L for 1h to 10h.

In some embodiments, the acid solution includes at least one of hydrochloric acid, nitric acid, and sulfuric acid.

In some embodiments, the concentration of the acid solution can be 1mol/L, 2mol/L, 3mol/L, 4mol/L, or 5mol/L, etc. Of course, it can also be other values within the above range, which is not limited here.

In some embodiments, the duration of acid solution treatment can be 1 h, 2 h, 3 h, 4 h, 5 h, 6 h, 7 h, 8 h, 9 h, or 10 h, etc. Of course, it can also be other values within the above range, which is not limited here.

In some embodiments, the molar ratio of the composite to the carbon source is 1:(0.01 to 10), e.g., 1:0.01, 1:0.1, 1:1, 1:2, 1:3, 1:4, 1:5, 1:6, 1:7, 1:8, 1:9, or 1:10, etc. Of course, other values within the above range can also be used, which is not limited here. It can be understood that the present disclosure changes the size and porosity of the pores in the carbon matrix by controlling the molar ratio of the composite material M to the carbon source, that is, by controlling the molar ratio of the silicon alloy AₓSi to the carbon source. Specifically, the metal in the silicon alloy AₓSi A reacts with oxygen in the carbon source to form a metal oxide. The carbon source is carbonized into a carbon matrix during the thermal reaction. After the metal oxide is pickled, the pores are left in the carbon matrix to form a carbon matrix with pores. The higher the silicon content in the silicon alloy AₓSi, the smaller the metal content, and the smaller the pore diameter. The higher the silicon content in the silicon alloy AₓSi, the greater the thickness of the silicon alloy, and the greater the thickness of the carbon matrix formed, which can have a well electric conduction on silicon particles with a larger size range.

In some embodiments, the mixing method may include any one of magnetic stirring, mechanical stirring, ultrasonic dispersion and grinding dispersion.

In some embodiments, the temperature of the thermal reaction is 200°C to 950°C, e.g., 200°C, 300°C, 400°C, 500°C, 600°C, 700°C, 800°C, or 950°C, etc. Of course, it can also be other values within the above range, which is not limited here.

In some embodiments, the heat preservation period of the thermal reaction is 1h to 24h. For example, the heat preservation period can be 1h, 3h, 6h, 10h, 13h, 15h, 18h, 20h, or 24h, etc. Of course, it can be other values within the above range, which is not limited here.

In some embodiments, the heating rate of the thermal reaction is 1°C/min to 20°C/min, such as 1°C/min, 2°C/min, 3°C/min, 4°C/min, 5°C/min, 6°C/min, 7°C/min, 8°C/min, 9°C/min, 10°C/min, 11°C/min, 12°C/min, 13°C/min, 14°C/min, 15°C/min, 16°C/min, 17°C/min, 18°C/min, 19°C/min, or 20°C/min, etc. Of course, it can also be other values within the above range, which is not limited here.

In addition, the method of the present disclosure further includes:
Step S130, forming a coating layer on the surface of the silicon-carbon composite material to obtain the anode material.

In the above technical solution, the surface of the silicon-carbon composite material is coated, and the surface of the silicon-based material is sequentially provided with a loose carbon matrix and a coating layer that coats silicon particles. The formation of the coating layer can further solve the problems of large volume expansion and poor conductivity of the silicon anode.

In some embodiments, the step of forming a coating layer may be omitted.

In some embodiments, step S130 includes sintering the mixture containing the silicon-carbon composite material and the polymer particles under a vacuum condition to form the coating layer.

In the above technical solution, polymer particles can be directly used to coat the anode material, so as to realize the surface coating of the anode material. Polymer coating treatment, on the one hand, can prevent the electrolyte from entering the anode material to cause side reactions to reduce the first-effect capacity; on the other hand, it can cooperate with the amorphous carbon matrix to reduce the volume expansion of silicon, reduce the volume expansion of the entire composite material, and reduce swelling of the electrode plate.

In some embodiments, the polymer particles include at least one of asphalt, resin, polyester-based polymers, and polyamide-based polymers.

In some embodiments, the mass ratio of the polymer particle to the silicon-carbon composite material is 1:(0.1 to 10), e.g., 1:0.1, 1:1, 1:2, 1:3, 1:4, 1:5, 1:6, 1:7, 1:8, 1:9 or 1:10, etc. Of course, it can also be other values within the above range, which is not limited here. Controlling the mass ratio of polymer particles to silicon-carbon composites in the above range is beneficial to improve the first efficiency.

In some embodiments, the sintering temperature is 600°C to 1000°C, e.g., 600°C, 700°C, 800°C, 900°C, or 1000°C, etc. Of course, it can also be other values within the above range, which is not be limited here.

In some embodiments, the heat preservation period for sintering is 1h to 24h. For example, it can be 1h, 3h, 6h, 10h, 13h, 15h, 18h, 20h, or 24h, etc. Of course, it can also be other values within the above range, which is not be limited here.

In some embodiments, the heating rate of sintering is 1°C/min to 20°C/min, e.g., 1°C/min, 2°C/min, 3°C/min, 4°C/min, 5°C/min, 6°C/min, °C/min, 7°C/min, 8°C/min, 9°C/min, 10°C/min, 11°C/min, 12°C/min, 13°C/min, 14°C/min, 15°C/min, 16°C°C/min, 17°C/min, 18°C/min, 19°C/min, or 20°C/min, etc. Of course, it can also be other values within the above range, which is not limited here.

In some embodiments, the degree of vacuum under a vacuum condition is smaller than 0. 1Mpa, e.g., 0.05Mpa, 0.06Mpa, 0.07Mpa, 0.08Mpa or 0.09Mpa. Of course, other values within the range mentioned above can also be used, which is not be limited here.

In some embodiments, step S130 includes synthesizing a polymer on the surface of the silicon-carbon composite material using a chemical synthesis method, to form a coating layer.

In some embodiments, the chemical synthesis method includes a polymerization reaction, wherein the monomers participating in the polymerization reaction include at least one of dopamine, tannic acid, phenolic resin, glucose, starch, melamine, urethane, and acrylic acid.

In some embodiments, the coating layer includes a polymer, and the polymer includes at least one of a resin polymer and a polyester polymer. For example, the resin polymer can be any one of epoxy resin, acrylic resin, polyester resin, amino resin and phenolic resin, and the polyester polymer can be any one of polyurethane, thermosetting polyester and thermoplastic polyester.

In some embodiments, step S130 includes using chemical vapor deposition of an organic carbon source to form a coating layer on the surface of the silicon-carbon composite material.

In a third aspect, the present disclosure provides a lithium-ion battery including the above-mentioned anode material.

The embodiments of the present disclosure will be further described below in terms of multiple embodiments. The embodiments of the present disclosure are not limited to the following specific embodiments. Within the scope of unchanging principle rights, changes can be made as appropriate.

### Example 1

(1) The silicon powder was mixed with magnesium powder with a median particle size of 1µm in a molar ratio of 1:0.5; they were placed into an atmosphere furnace, then heated to 600°C at a heating rate of 3°C/min and held for 6h. After performing a sufficient alloying reaction, a composite in which silicon-magnesium alloy layer coats silicon particles was obtained.
(2) 1mol of the composite was mixed with 1mol of p-chlorophenol uniformly; the resulting mixture was placed into a sealed stainless steel reactor filled with argon atmosphere. The reactor was heated to 750°C at a heating rate of 3°C/min and held for 8h to fully react to obtain a reaction product. The reaction product was mechanically stirred in 1mol/L hydrochloric acid solution for 2h, then filtered, washed, and dried to obtain a silicon-carbon composite material in which the porous silicon-carbon layer coats the silicon material.
(3) After the phenolic resin and the silicon-carbon composite material were uniformly mixed at a mass ratio of 1:5, they were placed into a vacuum reaction furnace with a vacuum degree of 0.05Mpa, and then heated to 1000°C at a heating rate of 3°C/min and held for 6h to fully react to obtain the anode material.

FIG. 5 is a scanning electron microscope (SEM) photograph of the anode material prepared in Example 1 of the present disclosure. It can be seen from the SEM in FIG. 5 that a dense carbon coating layer is wrapped on the surface of the negative electrode material.

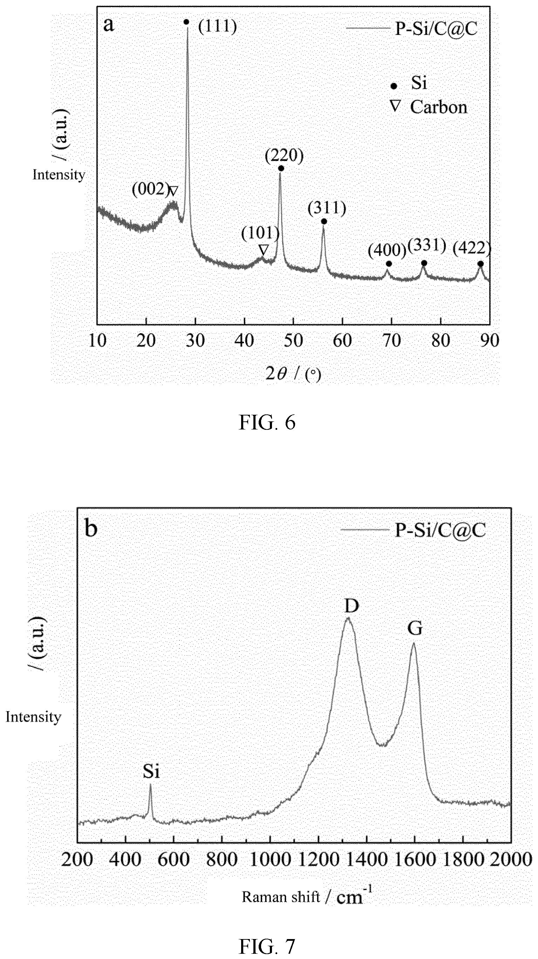

FIG. 6 is a Raman diagram of the anode material prepared in Example 1 of the present disclosure. The Raman diagram of FIG. 6 further proves that there is a D peak and a G peak near 1350µm and 1580µm, which are the characteristic peaks of amorphous carbon.

FIG. 7 is an XRD pattern of the anode material prepared in Example 1 of the present disclosure. From the XRD pattern of FIG. 7, it can be seen that the three strong peaks at 28.4°, 47.3° and 56.1°Closely correspond to those of the silicon (JCPDS No. 27-1402), basically without impurity phase.

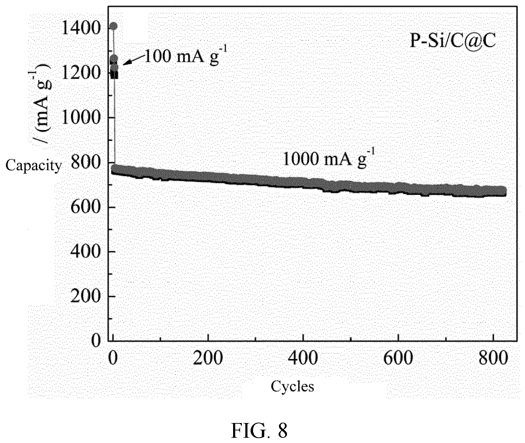

FIG. 8 is a cycle performance curve of the anode material prepared in Example 1 of the present disclosure, in which the charge and discharge current is 1000 mA/g. It can be seen from FIG. 8 that the material has excellent cycle performance, and there is still a capacity of 725 mAh/g after 820 cycles at a high current of 1000 mA/g.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores, and the coating layer is a carbon coating layer.

### Example 2

(1) The silicon powder was mixed with magnesium powder with a median particle size of 3µm in a molar ratio of 1:0.1; they were placed into an atmosphere furnace, then heated to 650°C at a heating rate of 1°C/min and held for 6h. After performing a sufficient alloying reaction, a composite in which silicon-magnesium alloy layer coats silicon particles was obtained.
(2) 1mol of the composite was mixed with 5mol of calcium carbonate uniformly; the resulting mixture was placed into a sealed stainless steel reactor filled with nitrogen atmosphere. The reactor was heated to 800°C at a heating rate of 7°C/min and held for 1h to fully react to obtain a reaction product. The reaction product was mechanically stirred in 1mol/L hydrochloric acid solution for 2h, then filtered, washed, and dried to obtain a silicon-carbon composite material.
(3) After the polyamide and the silicon-carbon composite material N were uniformly mixed at a mass ratio of 1: 10, they were placed into a vacuum reaction furnace with a vacuum degree of 0.01Mpa, and then heated to 1000°C at a heating rate of 3°C/min and held for 6h to fully react to obtain the anode material.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores, and the coating layer is a carbon coating layer.

### Example 3

(1) The silicon powder with a median particle size of 8µm was mixed with magnesium powder in a molar ratio of 1:1.5; they were placed into a nitrogen atmosphere furnace, then heated to 750°C at a heating rate of 5°C/min and held for 2h. After performing a sufficient alloying reaction, a composite in which silicon-magnesium alloy layer coats silicon particles was obtained.
(2) 1mol of the composite was mixed with 0.1mol of calcium carbonate uniformly; the resulting mixture was placed into a sealed stainless steel reactor filled with krypton atmosphere. The reactor was heated to 500°C at a heating rate of 5°C/min and held for 6h to fully react to obtain a reaction product. The reaction product was mechanically stirred in 1mol/L hydrochloric acid solution for 2h, then filtered, washed, and dried to obtain a silicon-carbon composite material in which a porous carbon coats silicon material.
(3) After the asphalt and the silicon-carbon composite material were uniformly mixed at a mass ratio of 2:5, they were placed into a vacuum reaction furnace with a vacuum degree of 0.01Mpa, and then heated to 900°C at a heating rate of 15°C/min and held for 1h to fully react to obtain the anode material.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores, and the coating layer is an amorphous carbon coating layer.

### Example 4

(1) The silicon powder with a median particle size of 15µm was mixed with zinc powder in a molar ratio of 1:3; they were placed into a neon atmosphere furnace, then heated to 500°C at a heating rate of 20°C/min and held for 24h. After performing a sufficient alloying reaction, a composite in which silicon-magnesium alloy layer coats silicon particles was obtained.
(2) 1mol of the composite was mixed with 10mol of sodium carbonate uniformly; the resulting mixture was placed into a sealed stainless steel reactor filled with neon atmosphere. The reactor was heated to 900°C at a heating rate of 5°C/min and held for 15h to fully react to obtain a reaction product. The reaction product was mechanically stirred in 1mol/L nitric acid solution for 2h, then filtered, washed, and dried to obtain a silicon-carbon composite material in which a porous carbon coats silicon material.
(3) After uniformly mixing the phenolic resin and the silicon-carbon composite material at a mass ratio of 1:0.1, they were placed into a vacuum reaction furnace with a vacuum degree of 0.01Mpa, and then heated to 950°C at a heating rate of 20°C/min and held for 6h to fully react to obtain the anode material.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores, and the coating layer is an amorphous carbon coating layer.

### Example 5

(1) The silicon powder with a median particle size of 0.2µm was mixed with magnesium powder in a molar ratio of 1:2; they were placed into a nitrogen atmosphere furnace, then heated to 900°C at a heating rate of 10°C/min and held for 1h. After performing a sufficient alloying reaction, a composite in which silicon-magnesium alloy layer coats silicon particles was obtained.
(2) 1mol of the composite was mixed with 0.01mol of hydroxybenzaldehyde uniformly; the resulting mixture was placed into a sealed stainless steel reactor filled with argon atmosphere. The reactor was heated to 750°C at a heating rate of 15°C/min and held for 8h to fully react to obtain a reaction product. The reaction product was mechanically stirred in 1mol/L hydrochloric acid solution for 2h, then filtered, washed, and dried to obtain a silicon-carbon composite material in which silicon-carbon composite layer coats the silicon material.
(3) After the phenolic resin and the silicon-carbon composite material were uniformly mixed at a mass ratio of 1:8, they were placed into a vacuum reaction furnace with a vacuum degree of 0.05Mpa, and then heated to 1000°C at a heating rate of 20°C/min and held for 10h to fully react to obtain the anode material.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores, and the coating layer is an amorphous carbon coating layer.

### Example 6

(1) The silicon powder with a median particle size of 5 µm was mixed with aluminum powder in a molar ratio of 1 :0.1; they were placed into an argon atmosphere furnace, then heated to 900°C at a heating rate of 5°C/min and held for 1h. After performing a sufficient alloying reaction, a composite in which silicon-aluminum alloy layer coats silicon particles was obtained.
(2) 1mol of the composite was mixed with 5mol of hydroxybenzaldehyde uniformly; the resulting mixture was placed into a sealed stainless steel reactor filled with helium atmosphere. The reactor was heated to 950°C at a heating rate of 10°C/min and held for 10h to fully react to obtain a reaction product. The reaction product was mechanically stirred in 1mol/L nitric acid solution for 2h, then filtered, washed, and dried to obtain a silicon-carbon composite material in which carbon matrix coats silicon-based material.
(3) 1 kg of silicon-carbon composite material was dispersed in 10L of deionized water, 200 ml of ammonia solution was added and stirred uniformly, then 1 kg of resorcinol and 100 ml of formaldehyde solution were added, stirred at room temperature for 8h, and then centrifuged and dried. The dried product in the reaction furnace was heated to 950°C at a heating rate of 3°C/min, and then held for 6h to fully react to obtain the anode material.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores, and the coating layer is a phenolic resin coating layer.

### Example 7

The difference differs from Example 1 that step (3) was not performed.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores.

### Example 8

The Example 8 differs from Example 1 that the phenolic resin in step (3) was replaced by titanium oxide.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores. The coating layer was a titanium oxide coating layer.

### Example 9

The Example 9 differs from Example 1 that the phenolic resin in step (3) was replaced by titanium nitride.

The anode material obtained in the present example has a core-shell structure. The anode material includes a core, a porous silicon carbon composite layer distributed on the surface of the core. The core includes silicon simple substance, the porous silicon carbon composite layer includes a carbon matrix and silicon particles dispersed in the carbon matrix. The carbon matrix has pores. The coating layer was a titanium nitride coating layer.

### Example 10

(1) The silicon-germanium alloy powder with a median particle size of 1µm was mixed with magnesium powder in a molar ratio of 1:0.4; they were placed into an atmosphere furnace, then heated to 600°C at a heating rate of 3°C/min and held for 6h. After performing a sufficient alloying reaction, a composite of silicon-magnesium alloy layer covering silicon-germanium alloy particles was obtained.
(2) 1mol of the composite was mixed with 1mol of p-chlorophenol uniformly; the resulting mixture was placed into a sealed stainless steel reactor filled with argon atmosphere. The reactor was heated to 750°C at a heating rate of 3°C/min and held for 8h to fully react to obtain a reaction product. The reaction product was mechanically stirred in 1mol/L hydrochloric acid solution for 2h, then filtered, washed, and dried to obtain a silicon-carbon composite material in which a porous silicon-carbon layer coats silicon material.
(3) After the phenolic resin and the silicon-carbon composite material were uniformly mixed at a mass ratio of 1:5, they were placed into a vacuum reaction furnace with a vacuum degree of 0.05Mpa, and then the reaction furnace was heated to 1000°C at a heating rate of 3°C/min for 6h to fully react, the anode material was obtained.

The anode material obtained in the present example has a core-shell structure. The anode material includes a core, a porous silicon carbon composite layer distributed on the surface of the core. The core includes a silicon-germanium, the porous silicon carbon composite layer includes a carbon matrix and silicon particles dispersed in the carbon matrix. The carbon matrix has pores, and the coating layer was an amorphous carbon resin coating layer.

### Example 11

(1) The silicon oxide (SiO) powder with a median particle size of 3µm was mixed with magnesium powder in a molar ratio of 1:0.8; they were placed into an atmosphere furnace, then heated to 650°C at a heating rate of 1°C/min and held for 6h. After performing a sufficient alloying reaction, a composite of silicon-magnesium alloy layer covering silicon oxide particles was obtained.
(2) 1mol of the composite was mixed with 5mol of calcium carbonate uniformly; the resulting mixture was placed into a sealed stainless steel reactor filled with nitrogen atmosphere. The reactor was heated to 800°C at a heating rate of 7°C/min and held for 1h to fully react to obtain a reaction product. The reaction product was mechanically stirred in 1mol/L sulfuric acid solution for 2h, then filtered, washed, and dried to obtain a silicon-carbon composite material.
(3) After the polyamide and the silicon-carbon composite material were uniformly mixed at a mass ratio of 1: 10, they were placed into a vacuum reaction furnace with a vacuum degree of 0.01Mpa, and then the reaction furnace was heated to 1000°C at a heating rate of 3°C/min for 6h to fully react, the anode material was obtained.

The anode material obtained in the present example has a core-shell structure. The anode material includes a core, a porous silicon carbon composite layer distributed on the surface of the core. The core includes a silicon oxide, the porous silicon carbon composite layer includes a carbon matrix and silicon particles dispersed in the carbon matrix. The carbon matrix has pores, and the coating layer was a carbon coating layer.

### Comparative Example 1

The Comparative Example 1 differs from Example 1 that, the carbon coating layer was directly prepared on the surface of the silicon core, and the specific preparation steps were as follows.

The silicon material and the phenolic resin were placed in a vacuum reaction furnace with a vacuum degree of 0.05Mpa after uniformly mixed at a mass ratio of 5:1; and the reaction furnace was heated to 900°C at a heating rate of 3°C/min and held for 6h to fully react to obtain the anode material.

### Performance Test

### 1. The mass proportion of silicon particles in the anode material

The surface of the anode material was peeled off layer by layer by using a Focused Ion Beam (FIB). The silicon simple substance content in the composite layer of each section was measured by combining a Scanning Electron Microscope (SEM) and an Energy Dispersive Spectrometer (EDS). The total mass of silicon particles in the composite layer can be obtained by counting the silicon particle content of each section. The total mass of silicon particles/mass of anode material is the mass ratio of silicon particles in the anode material.

### 2. The mass ratio of the silicon-based material core in the anode material

The composite anode material particles were peeled off layer by layer by using a FIB. The silicon-based material core element content (silicon simple substance content was measured in the monolithic silicon core; silicon and metal element contents were measured in the silicon alloy core; and silicon and oxygen element contents were measured in the silicon oxide core) of each section was measured by combining with SEM and EDS. The total content of core elements in the silicon-based material for each section was counted, to obtain the mass ratio of the silicon-based material core in the anode material.

### 3. The mass ratio of the carbon material in the anode material

Through the TG/DSC test, the thermogravimetric curve of the carbon material was tested. The content proportion of the carbon material was obtained according to the position of the exothermic peak and combined with the TG curve.

### 4. Pore volume ratio of macropores and mesopores

The pore volume ratio of macropores to mesopores was obtained by BET-BJH test method.

### 5. Porosity of the anode material

The porosity of the anode material was tested by a mercury intrusion tester.

### 6. The powder tap density of the anode material

It was directly tested by the powder tap density tester.

### 7. The mass ratio of silicon particles to silicon-based materials

The content of silicon particles was obtained by test method 1, and the content of silicon-based materials was obtained by test method 2.

### 8. Median particle size of silicon particles

10 anode material particles were peeled off layer by layer by FIB. The silicon particle size of each section was measured by combining with SEM and EDS. The measured silicon particle sizes were counted, the irregular silicon particle size was calculated according to the average value of the maximum length and maximum width of the section. The corresponding particle size when the cumulative particle size distribution percentage reaches 50% was the median particle size.

### 9. Median particle size of silicon-based materials

10 composite anode material particles were peeled off layer by layer by FIB. By combining with SEM and EDS, the silicon-based material on each section was measured. The size of the irregular silicon-based material was calculated according to the average value of the maximum length and maximum width of the section. The size of the measured silicon-based material was counted. The corresponding particle size when the cumulative particle size distribution percentage reaches 50% diameter was the median particle size.

### 10. Thickness of the porous silicon-carbon composite layer

SEM characterization was carried out on a transmission electron microscope with an operating voltage of 200kV, and the thickness of the porous silicon-carbon composite layer was scaled.

### 11. In the porous silicon-carbon composite layer, the molar ratio of the silicon particles dispersed in the solid part and the silicon particles dispersed in the pores

The anode material particles were peeled off layer by layer by FIB. By combining with SEM and EDS, the element content of the silicon particles in the solid part and the silicon particles dispersed in the pores were analyzed, and the content ratio of the silicon particles in the two positions were counted, which was the molar ratio.

### 12. The median particle size of the anode material

The anode material was tested by using a laser particle size analyzer Malvern MS3000. The particle size corresponding to the statistical cumulative particle size distribution volume percentage reaching 50% was the median particle size.

### 13. The specific surface area of the anode material

It was obtained by testing with an American Mike TriStar3020 Specific Surface Tester;

### 14. Oxygen content of the anode material.

It was tested by German Verder ONH 2000 oxygen, nitrogen and hydrogen element Analyzer;

### 15. The rebound rate was tested by the following method

The rebound rate was tested by combining an in-situ Transmission Electron Microscope (TEM for short) and an electrochemical test system. The rebound rate was obtained by measuring the thickness of the porous silicon-carbon composite layer after compression and rebound by in-situ TEM. After applying a voltage to the anode material, the core of the silicon-based material expands and squeezes the porous silicon-carbon composite layer, the thickness after compression was He. After the reverse voltage was applied, the core of the silicon-based material shrinks and the porous silicon-carbon composite layer begins to rebound. The rebounding thickness is defined as Hd, and Hi is the original thickness of the porous silicon-carbon composite layer. Then the compression rate=(Hi-He)/Hi^{∗}100%, and rebound rate=Hd/(Hi-He)^{∗}100%;

### 16. The electrochemical cycle performance was tested by the following method

Each of the anode materials prepared in Examples 1 to 11 and Comparative Example 1, conductive agents and binders were dissolved in a solvent at a mass ratio of 94:1:5 and mixed to control the solid content to be 50%, and then coated on the copper foil current collector, and vacuum-dried to obtain the anode sheet. Then the ternary positive electrode plate prepared by the traditional mature process, 1mol/L of LiPF6/ethyl cellulose + dicarbonate Methyl ester + ethyl methyl carbonate (v/v=1:1:1) electrolyte, polypropylene separator (Celgard2400), and shell were assembled as 18650 cylindrical single cells by conventional production process. The charge and discharge test of the cylindrical battery was performed on the LAND battery test system of Wuhan Jinnuo Electronics Co., Ltd., under normal temperature conditions, with 0.2C constant current charge and discharge, and the charge and discharge voltage were limited to 2.75-4.2V. The first reversible capacity, the first cycle charge capacity and the first cycle discharge capacity can be obtained. The first coulombic efficiency = the first cycle discharge capacity / the first cycle charge capacity.

50 cycles were repeated, the thickness of the lithium-ion battery was measured using a micrometer. At this time, the thickness of the pole piece was H1, the initial thickness of the battery pole piece was H0, and the expansion rate after 50 cycles = (H1-H0)/H0×100%.

100 cycles were repeated, and the discharge capacity was recorded as the remaining capacity of the lithium-ion battery. Capacity retention rate= remaining capacity/initial capacity^{∗}100%.

The results of the above performance tests were shown in Table 1. The anode materials prepared in Examples 1 to 11 and Comparative Example 1 were applied to lithium-ion batteries, and the numbers were S1, S2, S3, S4, S5, S6, S7, S8 and S9; Comparative Example 1 was numbered Ref-1.

**Table 1: The performance parameters (PM) of the anode materials (NEMs) prepared in Examples 1 to 11 and Comparative Example 1**

| Performance parameter | S1 | S2 | S3 | S4 | S5 | S6 | S7 | S8 | S9 | S10 | S11 | Ref-1 |
|---|---|---|---|---|---|---|---|---|---|---|---|---|
| Mass ratio of silicon particles in the anode material (%) | 12 | 8 | 20 | 28 | 18 | 13.5 | 12.6 | 15 | 13.5 | 18 | 22 | / |
| Mass ratio of silicon-based material core in anode material (%) | 40 | 20 | 40 | 40 | 30 | 30 | 42 | 50 | 45 | 60 | 55 | 75 |
| Mass ratio of carbon material in anode material (%) | 20 | 15 | 22 | 55 | 58 | 30 | 35 | 35 | 36 | 14 | 16 | 25 |
| Pore volume ratio of macropores to mesopores | 5:1 | 3.6:1 | 2.4:1 | 1.2:1 | 1:1 | 0.5:1 | 5:1 | 5:1 | 5:1 | 4.5:1 | 3.9:1 | / |
| Thickness of porous silicon-carbon composite layer (µm) | 0.5 | 2 | 0.01 | 10 | 5 | 0.2 | 0.5 | 0.5 | 0.5 | 0.48 | 2.2 | / |
| Porosity of anode material (%) | 20 | 37 | 50 | 37 | 10 | 48 | 18 | 18 | 18 | 19 | 26 | / |
| Mass ratio of silicon particles to silicon-based material | 0.3 | 0.4 | 0.5 | 0.7 | 0.6 | 0.45 | 0.3 | 0.3 | 0.3 | 0.3 | 0.4 | / |
| Median particle size of silicon particles (nm | 5 | 67 | 17 | 24 | 200 | 138 | 5 | 5 | 5 | 5 | 60 | / |
| Ratio of median particle size of silicon-based material to thickness of porous silicon-carbon composite layer | 5:1 | 3.2:1 | 1:1 | 10:1 | 4:1 | 7:1 | 5:1 | 5:1 | 5:1 | 5:1 | 3:1 | / |
| Median particle size (µm) of silicon-based materials | 1 | 15 | 5 | 9.8 | 1 | 2.6 | 1 | 1 | 1 | 1 | 13 | 1 |
| In the porous silicon-carbon composite layer, molar ratio of silicon particles embedded in solid part to silicon particles dispersed in pores | 1 : 0.5 | 1 : 0.6 | 1 : 1 | 1 : 3 | / | 1:2 | 1 : 0.5 | 1 : 0.5 | 1 : 0.5 | 1:0.5 | 1:0.6 | / |
| When the compression rate of the anode material reaches 50%, rebound rate of porous silicon-carbon composite layer (%) | 95 | 92 | 98 | 94 | 93 | 91 | 91 | 92 | 95 | 95 | 92 | / |
| Thickness of coating layer (nm) | 80 | 3 | 4 | 30 | 200 | 120 | / | 36 | 47 | 79 | 3 | 165 |
| Median particle size of anode material (D50, µm) | 1.2 | 20 | 7.4 | 13.1 | 1.2 | 3.5 | 1 | 1.3 | 1.5 | 1.3 | 21 | 1.2 |
| Specific surface area of anode material (m²/g) | 18 | 14 | 1 | 25 | 50 | 34 | 45 | 37 | 22 | 17 | 15 | 46 |
| Oxygen content of anode material (%) | 5 | 9 | 14 | 19 | 18 | 12 | 2 | 7 | 11 | 5 | 9 | 17 |
| Powder tap density of anode material (g/cm³) | 1.2 | 1.8 | 1.5 | 1.1 | 1.0 | 1.2 | 1.15 | 1.2 | 1.5 | 1.24 | 1.76 | 1.0 |
| 0.1A/g discharge specific capacity (mAh/g) | 1410 | 1344 | 1276 | 1167 | 1730 | 1487 | 1480 | 1400 | 1490 | 1230 | 1210 | 1568 |
| First Coulombic efficiency (%) | 88.6 | 86.8 | 84.5 | 82.3 | 76 | 87.9 | 86.1 | 85.2 | 89.0 | 88.2 | 79.8 | 86.3 |
| Capacity after 820 cycles of lA/g cycle (mAh/g) | 725 | 600 | 570 | 551 | 477 | 654 | 689 | 766 | 798 | 700 | 610 | 349 |
| Capacity retention ratio after 820 cycles of lA/g cycle (%) | 93 | 87.1 | 89.3 | 90.3 | 78.9 | 88.5 | 87.9 | 83.5 | 79.5 | 90 | 89 | 67.8 |
| Electrode film expansion rate (%) | 23 | 26 | 25 | 24 | 36 | 30 | 33 | 21 | 22 | 24 | 25 | 44 |

It can be seen from Table 1 that the anode materials prepared in Examples 1 to 5 include a core-shell structure anode material composed of a silicon-based material core, a porous silicon-carbon composite layer and a coating layer. The pores of the porous silicon-carbon composite layer can effectively reduce the volume expansion of the silicon core and silicon particles, and serve as an elastic conductor, which can provide more ion and electron transmission paths, enhance the conductivity between the silicon core and the outside world, and improve the rate performance. On the one hand, providing the coating layer can prevent the electrolyte from entering the interior and cause side reactions to reduce the first efficiency capacity. On the other hand, it can cooperate with the porous silicon-carbon composite layer to reduce the volume expansion of silicon, reduce the volume expansion of the entire composite material, and reduce the swelling of the electrode plate. The composite material prepared by the present disclosure has the advantages of high capacity, high rate performance and low expansion, and can be widely used in the field of high-performance lithium-ion battery anodes.

In Example 6, a chemical synthesis method was used to coat the polymer on the surface of the anode material to obtain a coating layer, and the prepared anode material also exhibited the characteristics of low volume expansion and high capacity.

In Example 7, during the process for preparing the anode material, no coating layer was prepared. The contact between silicon and electrolyte could not be reduced, and the expansion of the contained volume was limited, resulting in a large expansion rate of the electrode film and a low discharge specific capacity of the anode material.

It can be seen from Table 1 that the anode materials prepared in Examples 1 to 5 include a core-shell structure anode material composed of a silicon-based material core, a porous silicon-carbon composite layer and a coating layer. The pores of the porous silicon-carbon composite layer can effectively reduce the volume expansion of the silicon core and silicon particles, and serve as an elastic conductor, which can provide more ion and electron transmission paths, enhance the conductivity between the silicon core and the outside world, and improve the rate performance. On the one hand, providing the coating layer can prevent the electrolyte from entering the interior and cause side reactions to reduce the first efficiency capacity. On the other hand, it can cooperate with the porous silicon-carbon composite layer to reduce the volume expansion of silicon, reduce the volume expansion of the entire composite material, and reduce the swelling of the electrode plate. The composite material prepared by the present disclosure has the advantages of high capacity, high rate performance and low expansion, and can be widely used in the field of high-performance lithium-ion battery anodes.

In Example 6, a chemical synthesis method was used to coat the polymer on the surface of the anode material to obtain a coating layer, and the prepared anode material also exhibited the characteristics of low volume expansion and high capacity.

In Example 7, during the process for preparing the anode material, no coating layer was prepared. The contact between silicon and electrolyte could not be reduced, and the expansion of the contained volume was limited, resulting in a large expansion rate of the electrode film and a low discharge specific capacity of the anode material.

In Example 8 and Example 9, a metal oxide layer and a nitride layer were respectively prepared on the surface of the silicon-carbon composite material N, and the obtained anode materials can also exhibit excellent electrochemical performance.

In Example X and Example XI, silicon-germanium alloy was used as the core material respectively, and the obtained anode material can exhibit the characteristics of low volume expansion and high capacity.

In Example XI, silicon oxide (SiO) was used as the core material, and the obtained anode material can also exhibit excellent volume expansion suppression performance, and the capacity retention rate can also be maintained at a relatively high level.

In Comparative Example 1, during a process for preparing the anode material, the porous silicon-carbon composite layer was not prepared, and the volume expansion after silicon intercalation is large, resulting in material pulverization, the capacity of the anode material is low, and the expansion rate of the electrode film is large.

The applicant declares that according to the present disclosure, the detailed process equipment and process flow of the present disclosure are illustrated through the above-mentioned examples, but the present disclosure is not limited to the above-mentioned detailed process equipment and process flow. That is, it does not mean that the present disclosure can only be implemented relying on the above-mentioned detailed process equipment and process flow. Those skilled in the art should understand that any improvement to the present disclosure, the equivalent replacement of each raw material of the product of the present disclosure, the addition of auxiliary components, the selection manners, etc., all fall within the protection scope of the present disclosure.

## Claims

1. An anode material, comprising a core and a porous silicon-carbon composite layer distributed on at least part of a surface of the core, wherein the core comprises a silicon-based material, and the porous silicon-carbon composite layer comprises a carbon matrix and silicon particles dispersed in the carbon matrix; and the carbon matrix has pores.

2. The anode material according to claim 1, wherein at least part of the silicon particles are dispersed in the pores of the carbon matrix.

3. The anode material according to claim 1 or 2, wherein the anode material comprises at least one of the following features (1) to (20):
(1) the core is a silicon-based material;
(2) the silicon-based material comprises at least one of a silicon simple substance, a silicon alloy, and a silicon oxide;
(3) the silicon-based material comprises the silicon alloy, and the silicon alloy is at least one selected from a group consisting of silicon-tin alloy, silicon-lithium alloy, and silicon-germanium alloy;
(4) the silicon-based material comprises the silicon oxide, and the silicon oxide is SiOₓ, where 0<x≤2;
(5) a shape of the silicon-based material comprises at least one of a granular shape, a spherical shape, a spheroidal shape, a linear shape, and a tubular shape;
(6) the silicon-based material has a median particle size of 0.1µm to 15µm;
(7) the silicon-based material has a median particle size of 1µm to 5 µm;
(8) the porous silicon-carbon composite layer has a thickness of 0.01µm to 10µm;
(9) a ratio of the median particle size of the silicon-based material to the thickness of the porous silicon-carbon composite layer is (1 to 10): 1;
(10) the anode material has a porosity of 10% to 50%;
(11) the carbon matrix in the porous silicon-carbon composite layer has a mass proportion of 5% to 80%;
(12) the pores comprise macropores and mesopores;
(13) the pores comprise macropores and mesopores, and a pore volume ratio of the macropores to the mesopores is (0.5 to 5): 1;
(14) the silicon particle has a median particle size of 1nm to 500nm;
(15) the silicon particle has a median particle size of 10nm to 100nm;
(16) a mass ratio of the silicon particles to the silicon-based material is (0.3 to 0.7): 1;
(17) the carbon matrix comprises a solid part and pores distributed in the solid part, at least part of the silicon particles are embedded in the solid part;
(18) the carbon matrix comprises a solid part and pores distributed in the solid part, part of the silicon particles are dispersed in the pores, and part of the silicon particles are embedded in the solid part;
(19) the carbon matrix comprises a solid part and pores distributed in the solid part, part of the silicon particles are dispersed in the pores, and part of the silicon particles are embedded in the solid part; a molar ratio of the silicon particles embedded in the solid part to the silicon particles dispersed in the pores is 1:(0.5 to 3); and
(20) when a compression rate of the porous silicon-carbon composite layer reaches 50%, a rebound rate of the porous silicon-carbon composite layer is 90% or more.

4. The anode material according to claim 1, further comprising a coating layer formed on at least part of a surface of the porous silicon-carbon composite layer.

5. The anode material according to claim 4, wherein the coating layer comprises at least one of the following features (1) to (7):
(1) the coating layer comprises at least one of a carbon material, a metal oxide, a nitride and a conductive polymer;
(2) the coating layer comprises the carbon material, and the carbon material comprises at least one of graphene, soft carbon, hard carbon, and amorphous carbon;
(3) the coating layer comprises the metal oxide, and the metal oxide comprises at least one of titanium oxide, aluminum oxide, lithium oxide, cobalt oxide, and vanadium oxide;
(4) the coating layer comprises the nitride, and the nitride comprises at least one of titanium nitride, vanadium nitride, cobalt nitride, nickel nitride, and carbon nitride;
(5) the coating layer comprises the conductive polymer, and the conductive polymer comprises at least one of polyaniline, polyacetylene, polypyrrole, polythiophene, poly(3-hexylthiophene), polyp-styrene, polypyridine and polyphenylene vinylidene;
(6) the coating layer has a thickness of 3nm to 200nm; and
(7) the coating layer has a porosity of 2% to 10%.

6. The anode material according to any one of claims 1 to 5, wherein the anode material comprises at least one of the following features (1) to (4):
(1) the anode material has a median particle size of 0.1µm to 20µm;
(2) the anode material has a specific surface area of 1.0m²/g to 50m²/g;
(3) the anode material has a powder tap density of 0.2g/cm³ to 1.2g/cm³;
(4) the anode material has an oxygen content of smaller than 20%.

7. A method for preparing an anode material, wherein the method comprises steps of
preparing a composite, wherein the composite comprises a silicon-based material and an AₓSi alloy formed on at least part of a surface of the silicon-based material, A is an active metal, and X=1 to 3;
thermal reacting after the composite is mixed with a carbon source, such that at least part of the AₓSi alloy is converted into an oxide of metal A; and removing the oxide of metal A to obtain a silicon-carbon composite material.

8. The method according to claim 7, wherein the method further comprises at least one of the following features (1) to (26):
(1) the silicon-based material comprises at least one of silicon simple substance, a silicon alloy, and a silicon oxide;
(2) the silicon-based material comprises the silicon alloy, and the silicon alloy is at least one selected from a group consisting of silicon-tin alloy, silicon-lithium alloy, and silicon-germanium alloy;
(3) the silicon-based material comprises the silicon oxide, and the silicon oxide is SiOₓ, wherein 0<x≤2;
(4) a shape of the silicon-based material comprises at least one of a granular shape, a spherical shape, a spheroidal shape, a linear shape, and a tubular shape;
(5) a shape of the silicon-based material is a spherical shape or a spheroidal shape;
(6) the silicon-based material has a median particle size of 0.1µm to 15µm;
(7) the silicon-based material has a median particle size of 1µm to 5 µm;
(8) the active metal A comprises at least one of Mg, Al, Ca and Zn;
(9) a molar ratio of the silicon-based material to the active metal A is 1:(0.1 to 3);
(10) the step for preparing the composite comprises: alloying the silicon-based material with the active metal A under a protective atmosphere;
(11) the step for preparing the composite comprises: alloying the silicon-based material with the active metal A under a protective atmosphere, wherein a temperature of an alloying reaction is 400°C to 900°C, and a heat preservation period is 1 hour to 24 hours;
(12) the step for preparing the composite comprises: alloying the silicon-based material with the active metal A under a protective atmosphere, wherein a heating rate of the alloying reaction is 1°C/min to 10°C/min;
(13) the step for preparing the composite comprises: alloying the silicon-based material with the active metal A under a protective atmosphere, wherein the protective atmosphere comprises at least one selected from a group consisting of nitrogen, helium, neon, argon, krypton and xenon;
(14) the AₓSi alloy formed on at least part of the surface of the silicon-based material has a thickness of 0.05µm to 20µm;
(15) the composite has a median particle size of 0.1µm to 20µm;
(16) the carbon source comprises an organic carbon source;
(17) the carbon source comprises an organic carbon source, and the organic carbon source comprises aldehydes, phenols and corresponding halogenated compounds thereof that are solid at room temperature and have a boiling point <650°C;
(18) the carbon source comprises an inorganic carbon source;
(19) the carbon source comprises an inorganic carbon source, and the inorganic carbon source comprises a carbon-containing inorganic salt;
(20) the step of thermal reacting the composite with the carbon source is carried out under a protective atmosphere, and the protective atmosphere comprises at least one selected from a group consisting of nitrogen, helium, neon, argon, krypton, and xenon;
(21) the step of removing the active metal A in a thermal reaction product comprises pickling the thermal reaction product with an acid solution;
(22) the step of removing the active metal A in the thermal reaction product comprises pickling the thermal reaction product with an acid solution, and the acid solution comprises at least one of hydrochloric acid, nitric acid and sulfuric acid;
(23) a molar ratio of the composite to the carbon source is 1 :(0.01 to 10);
(24) the thermal reaction has a temperature of 200°C to 950°C;
(25) the thermal reaction has a heat preservation period of 1hour to 24hours;
(26) the thermal reaction has a heating rate of 1°C/min to 20°C/min.

9. The method according to claim 7 or 8, further comprising forming a coating layer on a surface of the silicon-carbon composite material to obtain the anode material.

10. The method according to claim 9, further comprising at least one of the following features (1) to (7):
(1) the step of forming the coating layer on the surface of the silicon-carbon composite material comprises: sintering a mixture containing the silicon-carbon composite material and polymer particles under a vacuum condition to form the coating layer;
(2) the step of forming the coating layer on the surface of the silicon-carbon composite material comprises: sintering a mixture containing the silicon-carbon composite material and polymer particles under a vacuum condition to form the coating layer; wherein the polymer particles comprise at least one selected from a group consisting of asphalt, resin, polyester-based polymers, and polyamide-based polymers;
(3) the step of forming the coating layer on the surface of the silicon-carbon composite material comprises: sintering a mixture containing the silicon-carbon composite material and polymer particles under a vacuum condition to form the coating layer; wherein a mass ratio of polymer particles to the silicon-carbon composite material is 1 :(0.1 to 10);
(4) the step of forming the coating layer on the surface of the silicon-carbon composite material comprises: sintering a mixture containing the silicon-carbon composite material and polymer particles under a vacuum condition to form the coating layer; wherein the sintering temperature is 600°C to 1000°C;
(5) the step of forming the coating layer on the surface of the silicon-carbon composite material comprises: sintering a mixture containing the silicon-carbon composite material and polymer particles under a vacuum condition to form the coating layer; wherein sintering heat preservation period is 1hour to 24hours;
(6) the step of forming the coating layer on the surface of the silicon-carbon composite material comprises: sintering a mixture containing the silicon-carbon composite material and polymer particles under a vacuum condition to form the coating layer; wherein the sintering heating rate is 1°C/min to 20°C/min; and
(7) the step of forming the coating layer on the surface of the silicon-carbon composite material comprises: sintering a mixture containing the silicon-carbon composite material and polymer particles under a vacuum condition to form the coating layer; wherein a vacuum degree of the vacuum condition is smaller than 0.1Mpa.

11. The method according to claim 9, further comprising at least one of the following features (1) to (2):
(1) the step of forming the coating layer on the surface of the silicon-carbon composite material comprises: synthesizing a polymer on the surface of the silicon-carbon composite material using a chemical synthesis method, to form the coating layer; and
(2) the step of forming the coating layer on the surface of the silicon-carbon composite material comprises: synthesizing a polymer on the surface of the silicon-carbon composite material using a chemical synthesis method, to form the coating layer, wherein the polymer comprises at least one of a resin polymer and a polyester-based polymer.

12. The method according to claim 9, wherein the step of forming the coating layer on the surface of the silicon-carbon composite material comprises: using chemical vapor deposition of an organic carbon source to form the coating layer on the surface of the silicon-carbon composite material layer.

13. A lithium ion battery, comprising the anode material according to any one of claims 1 to 6 or the anode material prepared by the method according to any one of claims 7 to 12.
